# EUROPÄISCHE PATENTSCHRIFT

(11) **EP 1 053 389 B1**
(45) Veröffentlichungstag und Bekanntmachung des Hinweises auf die Patenterteilung: **17.08.2005**
(21) Anmeldenummer: 99906136.9
(22) Anmeldetag: 16.01.1999
(51) Int. Cl.: F01L 13/00, F01L 13/08, F02D 43/00, F02D 41/22, F02B 1/12, F02D 13/02

(54) **VERFAHREN ZUM BETRIEB EINES IM VIERTAKT ARBEITENDEN VERBRENNUNGSMOTORS**
METHOD FOR OPERATING A FOUR-STROKE INTERNAL COMBUSTION ENGINE
PROCEDE PERMETTANT DE FAIRE FONCTIONNER UN MOTEUR A COMBUSTION INTERNE A QUATRE TEMPS

(30) Priorität: 07.02.1998 DE 19804988
(43) Veröffentlichungstag der Anmeldung: 22.11.2000
(73) Patentinhaber: DaimlerChrysler AG, 70567 Stuttgart (DE)
(72) Erfinder: GRUDEN, Igor, D-71229 Leonberg (DE); NIEBERDING, Rolf-Günther, D-70182 Stuttgart (DE); VENT, Guido, D-67346 Speyer (DE)
(86) Internationale Anmeldenummer: PCT/EP1999/000227
(87) Internationale Veröffentlichungsnummer: WO 1999/040296

(56) Entgegenhaltungen:
- EP-A- 0 686 759
- WO-A-98/07973
- US-A- 5 724 927

## Beschreibung

Die Erfindung betrifft ein Verfahren zum Betrieb eines im Viertakt arbeitenden Verbrennungsmotors der im Oberbegriff des Anspruchs 1 angegebenen Gattung.

Verbrennungsmotoren mit innerer Verbrennung bieten bei Kompressionszündung homogener, magerer Luft/Kraftstoff-Gemische die Möglichkeit einer geringen Stickoxidbildung und eines hohen thermischen Wirkungsgrades. Diese Vorteile stellen sich aber nur in einem engen Betriebsbereich ein, der von einer Vielzahl sich schnell ändernder Rahmenbedingungen abhängt.

Bei Kompressionszündung wird das Luft/Kraftstoffgemisch durch Kompressionswärme zur Entzündung gebracht. Nach dem Beginn der Entzündung wird durch die dabei freigesetzte Energie ein selbstbeschleunigender Verbrennungsprozeß eingeleitet. Eine zu niedrige Kompression führt zu verzögerter, unvollständiger Verbrennung, eine zu hohe Kompression zu unzulässig steilen Druckanstiegen und zu Gasschwingungen im Brennraum (klopfende Verbrennung).

In der EP 0 709 562 A2 ist ein Verfahren zur Steuerung der Ventilcharakteristik und eines Kraftstoff/Luft-Gemisches eines Verbrennungsmotors beschrieben. Dabei sind die einem Zylinder zugeordneten Einlaßventile bedarfsweise koppelbar, so daß das Kraftstoff/Luft-Gemisch wahlweise durch ein oder zwei Einlaßventile angesaugt werden kann. Dadurch kann die Gemischrate zwischen einem unteren Grenzwert mit relativ magerem Gemisch und einem oberen Grenzwert mit relativ fettem Gemisch verändert werden.

In der DE A 195 19 663 ist ein Verfahren zum Betrieb eines Verbrennungsmotors mit Kompressionszündung beschrieben. Hier wird in einer ersten Stufe ein mit äußerer Gemischbildung erzeugtes homogenes und mageres Luft/Kraftstoff-Gemisch bis nahe an die Zündgrenze komprimiert. In einer zweiten Stufe wird eine Zusatzmenge des gleichen Kraftstoffs fein zerstäubt und unter Vermeidung von Wandberührung in den Brennraum eingespritzt. Der spät eingespritzte Kraftstoff bildet eine Gemischwolke, die sich entzündet, da deren Zündgrenze aufgrund des höheren Kraftstoffgehalts unterhalb der in der ersten Stufe erreichten Kompressionstemperatur liegt.

In der EP 0 352 861 A ist ein Verfahren zum Betreiben eines Viertaktverbrennungskolbenmotors beschrieben. Das Verfahren umfaßt eine Speicherung einer Anzahl von Werten zum Bestimmen der verschiedenen Einlaß- und Auslaßventilbetriebszeiten sowie das Überwachen einer Anzahl bestehender Motorbetriebseigenheiten. Es erfolgt dann die Wahl des für die bestehenden Betriebseigenheiten am besten geeigneten Wertes sowie die Aktivierung des Ventils zu der vom gewählten Wert bestimmten Zeit. Dabei wird eine elektronisch gesteuerte ventilbetriebene Einrichtung betätigt. Das Verfahren umfaßt das selektive Ändern der Werte auf der Basis von Motorbetriebserfahrungen und dabei die Verwendung eines selbstangleichenden Motorsteuercomputers. Dabei enthält die Aktivierung das einmalige selektive Öffnen und Schließen sowohl des Einlaßals auch des Auslaßventils bei jedem vollständigen Kolbenrückgang nur dann, wenn die Motorgeschwindigkeit sich über einem vorgegebenen Wert befindet, wobei der Motor als Zweitaktmotor betrieben wird unter Verwendung derselben Einlaß- und Auslaßventile wie beim Viertaktbetrieb.

Aus der WO 9807973 A ist ein Verfahren bekannt, bei dem für den Betrieb einer selbstzündenden Brennkraftmaschine, die mit homogenem Gemisch betrieben wird, mit einem im Brennraum angeordneten Sensor, der zur Ermittlung einiger Verbrennungsparameter herangezogen wird. Insbesondere wird der Zylinderdruckverlauf erfasst. Anhand des Sensorsignals werden Parameter wie Verbrennungsverlauf, Brenndauer bzw. Verbrennungsbeginn bestimmt. Weiterhin werden Parameter wie die Umsetzungsrate bzw. der Zeitpunkt der Wärmefreisetzung ermittelt. Dadurch soll ein aktueller Verbrennungsverlauf ermittelt und mit abgespeicherten Daten verglichen werden.

Der Erfindung liegt die Aufgabe zugrunde, ein Verfahren der im Oberbegriff des Anspruchs 1 angegebenen Gattung zu schaffen, mit dem eine rasche Anpassung der Gemischbildung an einen gewünschten Verbrennungsprozeß möglich ist.

Die Aufgabe wird durch ein Verfahren mit den Merkmalen des Anspruchs 1 gelöst.

Das erfindungsgemäße Verfahren zum Betrieb eines im Viertakt arbeitenden Verbrennungsmotors mit homogenem, mageren Grundgemisch von Luft und Kraftstoff und mit Kompressionszündung zeichnet sich dadurch aus, dass das im Brennraum gebildete Luft/Kraftstoff-Gemisch-Verhältnis mit einem variablen Ventilsteuerungssystem veränderbar ist, welches ein Einlassorgan und ein Auslassorgan aufweist. Erfindungsgemäß erfolgt eine Messung der jeweiligen Verbrennung, wobei in Abhängigkeit eines aus einer Messung gewonnenen Signals von Lage und Verlauf der Verbrennung der Zeitpunkt des Schließens des Einlassorgans des Brennraums für den nächsten Zyklus geregelt wird, bei welchem durch den Zeitpunkt des Schließens des Auslassorgans eine im Brennraum verbleibende Abgasmenge verändert wird, so dass die Temperatur des gebildeten Luft/Kraftstoff-Gemisches variiert wird, wobei zur kontinuierlichen Optimierung der Verbrennungslage die Steuerzeiten des Einlassorgans in Abhängigkeit von der Gemisch- und Restgastemperatur und der Zusammensetzung des Luft/Kraftstoff-Gemisches geregelt werden.

Durch die schnelle Einstellung der Steuer- und Einspritzzeiten für jeden einzelnen Brennraum werden Schwankungen von Randbedingungen wie Gas- und Bauteiltemperaturen ausgeglichen und so eine optimale Verbrennung für jeden Arbeitszyklus in den Brennräumen verwirklicht.

Es ist ein variables Ventilsteuerungssystem für die Einlaßsteuerung des Brennraumes vorgesehen, durch welches die Veränderung der Menge der Kraftstoff/Luft-Masse im Brennraum bewirkt wird. Das variable Ventilsteuerungssystem erhält innerhalb eines Zyklus der Hubkolbenmaschine seine Ansteuerung von einer Steuerelektronik unabhängig von dem Größenzustand des Verbrennungsraumes. Die Regelung der Verbrennung ist bestrebt, die maximale Kompression herbeizuführen. Für die gegebene Volumenfunktion bei variabler Ausgangsmenge an Luft und Kraftstoff bedeutet dies, die maximale Füllung für den Brennraum anzustreben. Die Füllung wird begrenzt durch die sich einstellenden unerwünschten Brennraumdrucksteigerungen mit den sich anschließenden Brennraumdruckschwingungen. Diese unerwünschten Verbrennungs- und Explosionsvorgänge können während eines verbrennungszyklus über die Beurteilung der elektrischen Leitfähigkeit des Gemisches oder der Körperschallemission der Verbrennung über Körperschallsensoren, idealerweise Klopfsensoren, festgestellt werden.

Dieser Regeleingriff wird durch die Anwendung schneller, lernfähiger Elektronik unter Verwendung abgelegter Kennfelder oder neuronaler Netze ermöglicht.

Zusätzlich zu den die Verbrennung überwachenden Daten berücksichtigt diese Elektronik noch die Ventilsteuerzeiten und die Einspritzzeitpunkte sowie die daraus abgeleiteten Werte für Luftüberschuß und Restgasanteil. Der Einfluß der Umgebung und des Motorzustands wird mit der Ansauglufttemperatur und der Kühlwassertemperatur erfaßt.

Ein Ausführungsbeispiel der Erfindung ist nachstehend anhand der Zeichnung näher erläutert. In der Zeichnung zeigt:
- Fig. 1: eine schematische Darstellung eines Verbrennungsmotors mit einem Steuergerät und Mitteln zum Messen des Verbrennungsvorgangs,
- Fig. 2: Zylinderdruckdiagramm für den Gaswechsel mit Steuerzeiten der Gaswechselorgane.

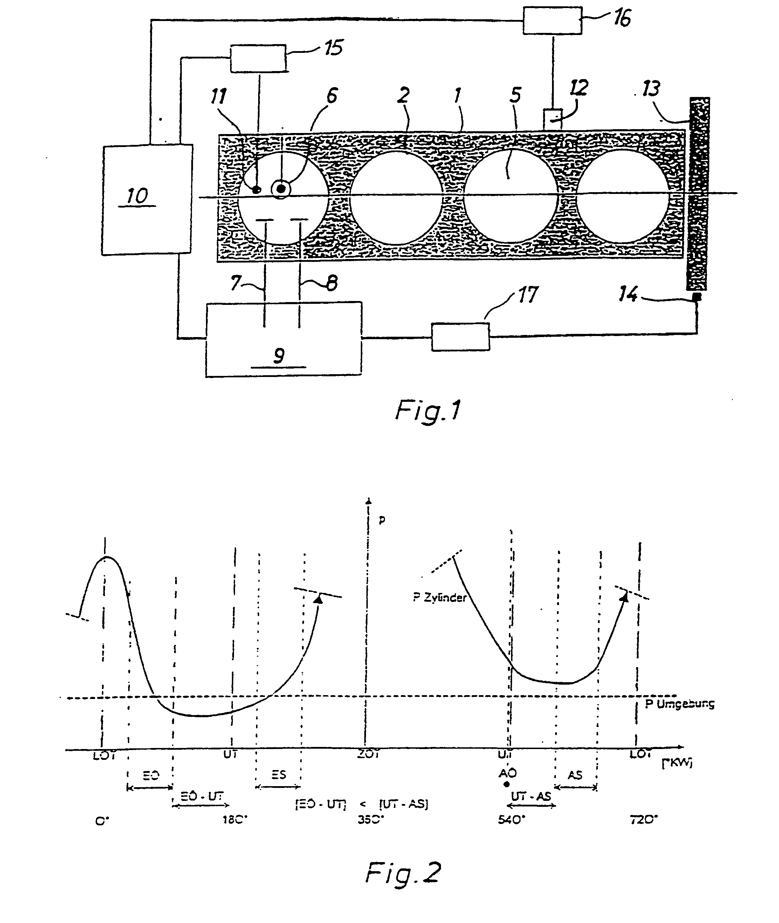

Der in der Fig. 1 schematisch dargestellte Verbrennungsmotor besitzt einen Zylinderblock 1 mit vier Zylindern 2, in denen Kolben dichtend geführt sind und die durch einen Zylinderkopf verschlossen sind. Zylinderblock 1, Kolben und Zylinderkopf umschließen einen Brennraum 5, in dem die Verbrennung stattfindet.

Im Zylinderkopf finden sich pro Brennraum 5 ein Kraftstoffeinspritzventil 6, ein Einlaßorgan 7 und ein Auslaßorgan 8. Die Gaswechselorgane 7, 8 werden von einer Betätigungsvorrichtung 9 geöffnet und geschlossen. Ein Steuergerät 10 steuert das Öffnen und schließen der Gaswechselorgane 7, 8 und des Kraftstoffeinspritzventils 6 stufenlos.

In jedem Zylinderkopf ist ein Ionenstromsensor 11 in Gestalt eines elektrischen Leiterpaares (z.B. einer Zündkerze) zur Messung der elektrischen Leitfähigkeit der Verbrennungsgase angeordnet. Zur Verbrennungsanalyse ist ein Ionisationsmeßgerät 15 vorgesehen, das mit dem Ionenstromsensor 11 und dem Steuergerät 10 verbunden ist. Am Zylinderblock 1 ist ein Klopfsensor 12 zur Messung des verbrennungsrelevanten Körperschalls angeordnet, dem ein Körperschallerfassungsgerät 16 zugeordnet ist. Im Bereich eines Schwungrads 13 befindet sich ein Drehzahlsensor 14 zum Messen der Drehungleichförmigkeit der Kurbelwelle, dessen Signale in einem Gerät 17 zur Drehmomentbeurteilung verarbeitet werden. Ionenstromsensor 11, Klopfsensor 12 und Drehzahlsensor 14 liefern Echtzeitsignale von Lage und Verlauf der Verbrennung für das Steuergerät 10.

Fig. 2 zeigt ein Zylinderdruckdiagramm mit Niederdruckkurven des Gaswechsels und mit Steuerzeitenbereichen der Gaswechselorgane 7, 8. Im Rahmen der folgenden Funktionsbeschreibung des erfindungsgemäßen Verfahrens werden drei qualitative Beispiele vorgestellt, die die Strategie der Verstellung der Steuerzeiten der Gaswechselorgane 7, 8 zeigen.

Durch Gestaltung eines Verbrennungsmotors mit variabler, effektiver Verdichtung (beispielsweise über die freie Ansteuerung der Einlaß- und Auslaßorgane 7, 8 zur stufenlosen Veränderung des Arbeitsraumvolumens) kann die variable Verdichtung mit einer Gemischbildung unter Rückhaltung von Abgas im Brennraum 5 zur Beeinflussung des nächsten Verbrennungsvorgangs kombiniert werden.

Zum Verhindern einer klopfenden Verbrennung durch eine variable, effektive Verdichtung sind rasch reagierende Gaswechselorgane 7, 8 und Kraftstoffeinspritzventile 6 erforderlich, die durch freie Ansteuerung mittels eines elektronischen Steuergeräts 10 die Füllung der einzelnen Brennräume 5 von Arbeitszyklus zu Arbeitszyklus variieren.

Die Strategie dieser Verbrennungsregelung zielt auf maximale, klopffreie Verdichtung, d.h. auf maximal mögliche Füllung der Brennräume 5. Die Verbrennung wird nach Lage und Verlauf durch den Ionenstromsensor 11 und/oder den Klopfsensor 12 und/oder den Drehzahlsensor 14 in Echtzeit gemessen bzw. wiedergegeben und durch die Regellogik des Steuergeräts 10 beurteilt. Der regelungstechnische Vergleich der sich einstellenden Stromwerte und deren Verlauf in Abhängigkeit von der Zeit mit den Verbrennungserscheinungen wird durch die Regellogik ausgewertet, die auf der Technologie neuronaler Netze basiert. Als zusätzliche Eingangsparameter zum Training der Logik werden noch das Luft/Kraftstoffverhältnis, die Ansauglufttemperatur und die Motordrehzahl herangezogen. Die Erkennung erfolgt dadurch, daß "gute" Verbrennung mit nicht erwünschter Verbrennung verglichen wird. Statt durch neuronale Netze kann die Steuerung auch über in Kennfeldern abgelegte Werte erfolgen.

Für die Messung der elektrischen Leitfähigkeit des Verbrennungsgases wird eine Spannung auf ein elektrisches Leiterpaar im Brennraum gelegt und der Stromfluß über dieses Leiterpaar während der Verbrennung überwacht. Über den qualitativen und quantitativen Verlauf des Stromflusses während der Verbrennung wird die Verbrennungslage sowie die Art der Verbrennung bestimmt, d.h. ein Auftreten unerwünschter Verbrennungserscheinungen erkannt.

Die Erkennung eines unerwünschten Verbrennungszyklus führt zu einer Absenkung der effektiven Kompression für den nächsten Zyklus in eben jenem Zylinder, in dem die unerwünschte Verbrennung durch die oben beschriebene verbrennungsüberwachung festgestellt wurde. Die effektive Kompression wird über die Verminderung der zugeführten Luft- und Kraftstoffmenge gerade so weit abgesenkt, bis sich kein unerwünschtes Verbrennungsverhalten mehr zeigt.

Zur Absenkung der effektiven Kompression wird die Ansaugphase nicht vollständig ausgenutzt, das heißt, das Einlaßorgan schließt vor Erreichen des unteren Totpunkts. Nach Schließen des Einlaßorgans entsteht im Brennraum 5 ein Unterdruck, der die Gemischbildung speziell im Fall einer inneren Gemischbildung unterstützt.

Zur Entzündung des Frischgemischs muß dessen Temperatur auf den minimal erforderlichen Wert gebracht werden. Die Temperaturerhöhung kann durch geometrische Kompression oder durch Vermischung des kalten Frischgases mit Wärme und Abgas herbeigeführt werden. Mit der variablen Steuerung des Auslaßorgans kann die abgeströmte Menge des Abgases beeinflußt werden.

Mit derselben Steuerung kann die Menge an Abgas, die im Brennraum zurückbehalten wird, beeinflußt werden. Die Expansionsphase des Verbrennungsmotors dauert für einen optimalen Wirkungsgrad bis zum unteren Totpunkt des Kolbenwegs. Das Auslaßorgan öffnet zu Beginn des Ausschubtaktes. Wegen gasdynamischer, drehzahlabhängiger Effekte kann auch der Öffnungszeitpunkt des Auslaßorgans 8 optimiert werden.

Durch den Überdruck im Brennraum 5 wird das Abgas aus demselben gefördert. Der Überdruck im Brennraum 5 entsteht durch den Restdruck der Verbrennung und durch die Verringerung des Brennraumvolumens beim Ausschubtakt. Das Auslaßorgan 8 wird während des Ausschubtakts wieder geschlossen, wodurch das Abgas im Brennraum nicht vollständig ausgeschoben, sondern wieder komprimiert wird. Dabei wird die Temperatur des Restgases erhöht.

Die Regelung des Öffnungszeitpunkts des Einlaßorgans 7 dient der Optimierung der Gemischbildung auf die aktuellen Temperaturbedingungen des instationären Betriebs. Während des Ansaughubs öffnet das Einlaßorgan 7 zu dem Zeitpunkt, wenn der Druck im Brennraum 5 unter das Druckniveau der Umgebung gefallen ist. Bei früherem Einlaßöffnen gelangt der Abgasstrom in unerwünschter Weise in die Ansaugleitung. Das Einlaßorgan 7 wird während des Ansaugtakts immer nach dem Zeitpunkt der Stellung des Kolbens geöffnet, die dieser während des Ausschubtakts beim Schließen des Auslaßorgans 8 einnahm.

Während des Saughubs wird durch die sich einstellende Druckdifferenz neue Ladungsmasse angesaugt. Der Schließzeitpunkt des Auslaßorgans 8 legt die Restgasmenge und damit die ansaugbare Gemischmasse für den nächsten Ansaughub fest. Die Zusammensetzung des Gemischs aus Luft und Kraftstoff bestimmt den Energiegehalt der im nächsten Zyklus angesaugten Gemischmasse. Während der Optimierung des Wirkungsgrads eines mit konstanter Last arbeitenden Verbrennungsmotors sollte die Gemischzusammensetzung in erster Näherung konstant gehalten werden. Die Variation der angesaugten Gemischmenge ergibt sich aus den gegebenen Kompressionsverhältnissen und den Restgasanteilen. Eine eventuell notwendige Kompensation von Laständerungen kann bei innerer und äußerer Gemischbildung mit der eingespritzten Kraftstoffmenge vorgenommen werden.

Um ausreichend Zeit für die Gemischansaugung zu haben, muß das Einlaßorgan 7 genügend lange geöffnet sein. Die zeitliche Verzögerung der Öffnung des Einlaßorgans 7 gegenüber dem Ende der Restgasexpansion verkürzt die zum Einströmen der Ladung verbliebene Zeit, erhöht aber den Unterdruck im Brennraum 5 und damit die Einströmgeschwindigkeit des Frischgemischs. Dies führt zu einer guten Vermischung des Luft/Kraftstoffgemischs mit dem warmen Restgas des vorangegangenen Verbrennungszyklus.

Als Nachteil des erhöhten Unterdrucks im Brennraum 5 ergibt sich eine Abkühlung von dessen Gasmasse. Dieser Abkühlung steht der Vorteil verbesserter Gemischbildung durch die erhöhte Strömungsgeschwindigkeit gegenüber. Die bessere Gemischbildung verringert das durchschnittliche Einzelvolumen des Abgasanteils. Mit zunehmend feinerer Vermischung wird das Oberflächen/Volumenverhältnis des Abgasteilvolumens so gering, daß die Wärmeleitung die maximale Temperatur des Restgases zunehmend absenkt. Die maximale Temperatur im Abgasteilvolumen bestimmt die Zündwilligkeit des umgebenden Frischgemischs während der Kompression.

Die Steuerzeiten des Einlaßorgans 7 müssen in Abhängigkeit von der Gemisch- und Restgastemperatur und der Zusammensetzung des Luft/Kraftstoffgemischs optimiert werden. Dies kann über in Kennfeldern abgelegten Werten oder mit der Technologie der neuronalen Netze geschehen. Bei kaltem Motor sind hohe Strömungsgeschwindigkeiten mit daraus folgender guter Gemischbildung wichtiger als die damit verbundenen Füllungsverluste. Dabei wird die Kühlwassertemperatur als weitere Regelgröße berücksichtigt.

Einen weiteren Freiheitsgrad zur Optimierung der Gemischbildung bietet der Einlaßdrall aufgrund von unsymmetrischen Einströmbedingungen. Die zeitlich versetzte Ansteuerung von zwei unabhängig ansteuerbaren Einlaßorganen 7 kann für die Optimierung im Betrieb durch geringe Veränderungen herangezogen werden.

Zur kontinuierlichen Optimierung der Verbrennungslage während eines stabilen und stationären Verbrennungsvorgangs kann der zeitliche Verlauf der elektrischen Leitfähigkeit der Brenngase herangezogen werden. Dabei werden die Ansteuerzeiten der Einlaßorgane 7 in geringem Maße variiert und deren Auswirkungen auf die Verbrennungslage und das Betriebsverhalten überprüft. Bei Verbesserung derselben werden die veränderten Steuerzeiten für die gegebenen Umgebungsbedingungen abgelegt.

Als qualitative Beispiele einer Steuerzeiteinstellung werden folgende Fälle anhand von Fig. 2 beschrieben:
Fall der geringen Last, mageres Luft/Kraftstoffgemisch:
   Auslaßschluß: früh - nur wenig Abgas wird aus dem Brennraum 5 herausgelassen.
   Einlaßöffnung: spät - lange Expansion aufgrund der großen und durch Kompression heißen Abgasmenge, die überexpandiert wird, führt zu einer guten Vermischung des Frischgases im Abgas.
   Einlaßschluß: spät - mageres Gemisch braucht hohe Kompression zur Entzündung.
Fall der hohen Last, fetteres Luft/Kraftstoffgemisch:
   Auslaßschluß: spät - viel Abgas muß durch Frischgemisch ersetzt werden.
   Einlaßöffnung: früh - die hohe Menge an einströmendem Frischgas sorgt für gute Vermischung.
   Einlaßschluß: früh - fettes Gemisch zündet leichter und die Verbrennung soll nicht aufgrund zu hoher Verdichtung in unerwünschte Bereich umschlagen.
Fall der ansteigenden Drehzahl:
   Auslaßschluß: tendenziell später, da mit zunehmender Drehzahl der Wandwärmeverlust abnimmt, der Kompressionsvorgang zu einer höheren Gastemperatur führt und weniger Restgas nötig ist.
   Einlaßöffnung: tendenziell früher, da höhere Gasgeschwindigkeit und Drehzahl zu ausreichend guter Vermischung führen.
   Einlaßschluß: tendenziell später, um die mit der Drehzahl abnehmende Reaktionszeit durch längere Ansaug- und Kompressionszeit und höhere Verdichtungsendtemperatur zu kompensieren.

## Patentansprüche

1. Verfahren zum Betrieb eines im Viertakt arbeitenden Verbrennungsmotors mit homogenem, mageren Grundgemisch von Luft und Kraftstoff und mit Kompressionszündung, wobei das im Brennraum (5) gebildete Luft/Kraftstoff-Gemisch-Verhältnis mit einem variablen Ventilsteuerungssystem veränderbar ist, welches ein Einlassorgan (7) und ein Auslassorgan (8) aufweist, bei dem
- eine Messung der jeweiligen Verbrennung erfolgt,
**dadurch gekennzeichnet, dass**
- in Abhängigkeit von einer aus dieser Messung gewonnenen Lage und Verlauf der Verbrennung der Zeitpunkt des Schließens des Einlassorgans (7) des Brennraums (5) für den nächsten Zyklus geregelt wird,
- bei welchem durch den Zeitpunkt des Schließens des Auslassorgans (8) eine im Brennraum (5) verbleibende Abgasmenge verändert wird, so dass die Temperatur des gebildeten Luft/Kraftstoff-Gemisches variiert wird, wobei
- zur kontinuierlichen Optimierung der Verbrennungslage die Steuerzeiten des Einlassorgans (7) in Abhängigkeit von der Gemisch- und Restgastemperatur und der Zusammensetzung des Luft/Kraftstoff-Gemisches optimiert werden.

2. Verfahren nach Anspruch 1,
**dadurch gekennzeichnet, dass** eine Detektion unerwünschter Verbrennungsvorgänge erfolgt und in Abhängigkeit eines entsprechenden Signals eine Absenkung der effektiven Kompression für den nächsten Zyklus in dem Zylinder (2) erfolgt, in dem die unerwünschte Verbrennung festgestellt wurde.

3. Verfahren nach Anspruch 1 oder 2,
**dadurch gekennzeichnet, dass** Lage und Verlauf der Verbrennung durch Motor-Istwerte wie den Körperschall am Verbrennungsmotor, den Ionenstrom im Brennraum (5) und die Drehungleichförmigkeit der Kurbelwelle in Echtzeit gemessen werden.

4. Verfahren nach einem der Ansprüche 1 bis 3,
**dadurch gekennzeichnet, dass** mittels einer in einem Steuergerät (10) enthaltenen Regellogik die Merkmale erwünschter und unerwünschter Verbrennungsbereiche aus in Kennfeldern abgelegten Parametern oder über die Mustererkennung durch neuronale Netze oder adaptive Regler erkannt werden und unter Verwendung der Motor-Istwerte die für die Verbrennungsoptimierung erforderlichen Sollwerte für die Gaswechselorgane (7, 8) und das Kraftstoffeinspritzventil (6) bestimmt werden.

5. Verfahren nach Anspruch 4,
**dadurch gekennzeichnet, dass** die Ermittlung der Sollwerte im Steuergerät (10) unter Berücksichtigung einiger oder sämtlicher der folgenden Motor-Istwerte erfolgt:
- Körperschallwerte von Klopfsensoren (12),
- Ionenstromwerte von Ionenstromsensoren (11),
- Motordrehzahl und deren Verlauf,
- Ventilsteuerzeiten,
- Einspritzzeitpunkte,
- Luftüberschuß und Restgasanteil,
- Ansauglufttemperatur,
- Kühlwassertemperatur.

6. Verfahren nach einem der Ansprüche 4 oder 5,
**dadurch gekennzeichnet, dass** durch den Zeitpunkt des Schließens des Auslassorgans (8) und das somit im Brennraum (5) verbleibende Abgas sowie die zugeführte Gemischmasse aus Kraftstoff und Frischgas (Luft) die Last des Motors gesteuert wird.

7. Verfahren nach einem der Ansprüche 1 bis 6,
**dadurch gekennzeichnet, dass** der Öffnungszeitpunkt des Einlassorgans (7) nach den geforderten Bedingungen der Gemischbildung innerhalb des Brennraums (5) in Abhängigkeit von thermischen Einflüssen auf das Frischgas (Luft) festgelegt wird.

8. Verfahren nach einem der Ansprüche 1 bis 7,
**dadurch gekennzeichnet, dass** durch die Gemischbildung über das Oberflächen/Volumen-Verhältnis die jeweilige Temperatur des Abgasanteils und damit der Verbrennungsbeginn im nächsten Zyklus bestimmt wird.

9. Verfahren nach einem der Ansprüche 1 bis 8,
**dadurch gekennzeichnet, dass** die Verbrennung auch bei stationären Betriebspunkten durch Variation von. Verdichtung, Turbulenz und Einspritzung optimiert wird.

## Claims

1. A process for operating an internal combustion engine with a four-stroke operating sequeace, with a homogenous, lean basic mixture of fuel and air and with compression ignition, it being possible to modify the fuel/air mixture ratio formed in the combustion chamber by means of a variable valve timing system which has an intake organ and an exhaust organ, in which
- the combustion process is measured,
**characterised in that**
- the point of closing of the intake organ (7) of the combustion chamber (5) for the next cycle is adjusted dependent on the position and course of combustion obtained from this measurement,
- at said point a volume of exhaust gas remaining in the combustion chamber (5) is modified by the point of closure of the exhaust organ (8) so that the temperature of the fuel/air mixture formed is varied,
- the valve timings of the intake organ (7) being adjusted dependent on the mixture and the residual gas temperatures and the composition of the fuel/air mixture in order to continuously optimise the combustion position.

2. A process in accordance with claim 1,
**characterised in that**
undesired combustion processes are detected and effective compression for the next cycle is reduced dependent on a corresponding signal in the cylinder (2) in which the undesired combustion was detected.

3. A process in accordance with claim 1 or 2,
**characterised in that**
the position and course of combustion are measured in real time using actual engine values such as the structure-borne noise at the internal combustion engine, the ion current in the combustion chamber (2) and the rotational uniformity of the crankshaft.

4. A process in accordance with one of claims 1 to 3,
**characterised in that**
the features desired and undesired combustion ranges are identified from parameters stored in characteristic maps or by pattern recoguition using neural networks or adaptive controllers by means of a control logic unit in a control device (10) and the reference values for the charge-changing organs (7, 8) and the fuel iunjector (6) required for combustion optimisation are determined using actual engine values.

5. A process in accordance with claim 4,
**characterised in that**
the reference values are determined in the control device (10) taking into account some or all of the following actual engine values:
- structure-borne noise values provided by knock sensors (12),
- ionic current values provided by ionic current flow sensors (11)
- engine speed and course,
- valve timings,
- injection points,
- leanness and residual gas component,
- intake air temperature,
- cooling water temperature.

6. A process in accordance with one of claims 4 or 5,
**characterised in that**
the load of the engine is controlled by the point of closure of the exhaust organ (8), the volume of exhaust gas thus remaining in the combustion chamber (5) and the mixture mass of fuel and fresh gas (air) supplied.

7. A process in accordance with one of claims 1 to 6,
**characterised in that**
the opening point of the intake organ (7) is set in accordance with the required conditions of mixture formation within the combustion chamber (5) dependent on thermal influences on the fresh gas (air).

8. A process in accordance with one of claims 1 to 7,
**characterised in that**
the temperature of the exhaust gas component and thus the start of combustion in the next cycle is determined by the mixture formation using the surface/volume ratio.

9. A process in accordance with one of claims 1 to 8,
**characterised in that**
combustion, even at steady-state operating points, is optimised by the variation of compression, turbulence and injection.

## Revendications

1. Procédé permettant de faire fonctionner un moteur à combustion interne à quatre temps avec un mélange de base homogène pauvre constitué d'air et de carburant et avec un allumage par compression, le rapport de mélange air/carburant formé dans la chambre de combustion (5) étant modifiable à l'aide d'un système de commande de soupape variable qui comporte un organe d'admission (7) et un organe d'échappement (8), dans lequel s'effectue
- une mesure de la combustion correspondante,
**caractérisé en ce que**
- le moment de fermeture de l'organe d'admission (7) de la chambre de combustion (5) est réglé pour le cycle suivant en fonction d'un état obtenu à partir de cette mesure et d'une allure de combustion,
- dans lequel, à l'aide du moment de fermeture de l'organe d'échappement (8), une quantité de gaz d'échappement restant dans la chambre de combustion (5) est modifiée, de sorte que la température du mélange air/carburant formé varie, moyennant quoi
- pour l'optimisation en continu de l'état de combustion, les temps de commande de l'organe d'admission (7) sont optimisés en fonction de la température du mélange et des gaz résiduels et de la composition du mélange air/carburant.

2. Procédé selon la revendication 1,
**caractérisé en ce qu'**une détection des processus de combustion indésirables est réalisée et **en ce que**, en fonction d'un signal correspondant, une diminution de la compression effective se produit pour le cycle suivant dans le cylindre (2) dans lequel la combustion indésirable a été constatée.

3. Procédé selon la revendication 1 ou 2,
**caractérisé en ce que** l'état et l'allure de la combustion sont mesurés en temps réel au moyen de valeurs réelles du moteur telles que le bruit de structure dans le moteur de combustion, le courant ionique dans la chambre de combustion (5) et la régularité de la rotation du vilebrequin.

4. Procédé selon l'une quelconque des revendications 1 à 3,
**caractérisé en ce que** les caractéristiques de plages de combustion souhaitées et indésirables sont identifiées à l'aide d'un élément logique de réglage contenu dans un organe de commande (10) à partir de paramètres déposés dans des réseaux de caractéristiques ou par l'intermédiaire de la reconnaissance de modèles au moyen de réseaux neuronaux ou de régulateurs adaptatifs et **en ce que**, en se servant des valeurs réelles du moteur, les valeurs théoriques nécessaires pour l'optimisation de la combustion sont déterminées pour les organes d'échange des gaz (7, 8) et pour la soupape d'injection de carburant (6).

5. Procédé selon la revendication 4,
**caractérisé en ce que** la détermination des valeurs théoriques dans l'organe de commande (10) se fait en tenant compte de certaines des, ou de toutes les valeurs réelles du moteurs suivantes :
- valeurs du bruit de structure de détecteurs de cognement (12),
- valeurs du courant ionique de détecteurs de courant ionique (11),
- vitesse de rotation du moteur et son allure,
- temps de commande de soupape,
- moments d'injection,
- excès d'air et portion de gaz résiduels,
- température d'air d'aspiration,
- température d'eau de refroidissement.

6. Procédé selon l'une quelconque des revendications 4 ou 5,
**caractérisé en ce que** la charge du moteur est commandée par le moment de fermeture de l'organe d'échappement (8) et par les gaz d'échappement restant ainsi dans la chambre de combustion (5), ainsi que par la masse de mélange amené constitué de carburant et de gaz frais (air).

7. Procédé selon l'une quelconque des revendications 1 à 6,
**caractérisé en ce que** le moment d'ouverture de l'organe d'admission (7) est fixé suivant les conditions nécessaires pour la formation du mélange à l'intérieur de la chambre de combustion (5) en fonction d'influences thermiques sur le gaz frais (air).

8. Procédé selon l'une quelconque des revendications 1 à 7,
**caractérisé en ce que** la température respective de la portion de gaz résiduels et, donc, le début de la combustion est déterminée pendant le cycle suivant grâce à la formation du mélange par l'intermédiaire du rapport surface/volume.

9. Procédé selon l'une quelconque des revendications 1 à 8,
**caractérisé en ce que** la combustion est optimisée grâce aux variations de la compression, de la turbulence et de l'injection, même avec des points de fonctionnement stationnaires.
